# EUROPEAN PATENT APPLICATION

(11) **EP 4 653 274 A1**
(43) Date of publication of application: **26.11.2025**
(21) Application number: 24177454.6
(22) Date of filing: 22.05.2024
(51) Int. Cl.: B60T 17/08, F16D 65/28

(54) **BOOT-SEAT-ARRANGEMENT FOR A SPRING BRAKE ACTUATOR FOR A PNEUMATIC BRAKING SYSTEM FOR A VEHICLE, IN PARTICULAR UTILITY VEHICLE, SPRING BRAKE ACTUATOR, PNEUMATIC BRAKING SYSTEM, AND VEHICLE**

(71) Applicant: ZF CV Systems Europe BV, 1170 Brüssel (BE)
(72) Inventor: SWIATKIEWICZ, JAKUB, 54-109 Wroclaw (PL); GLOWACKI, Adam, 50-227 Wroclaw (PL)
(74) Representative: Schäferjohann, Volker

(57) **Abstract**

Boot-seat-arrangement (100) for a spring brake actuator (250) for a pneumatic braking system (210) for a vehicle (200a), in particular utility vehicle (200b), wherein the boot-seat-arrangement (100) comprises a piston (105), a spring seat (110) for positioning a spring (220) on the piston (105), a push rod (125), and a boot (120) at least partially surrounding the push rod (125); the spring seat (110) comprises a socket (111) for contacting the piston (105); and the spring seat (110) and/or the boot (120) comprises an assembly section (115) between the socket (111) and the boot (120) for fixating the boot (120) to the socket (111).

## Description

The disclosure relates to Boot-seat-arrangement for a spring brake actuator for a pneumatic braking system for a vehicle, in particular utility vehicle. The disclosure also relates to a Spring brake actuator for a pneumatic braking system for a vehicle, in particular utility vehicle, to a pneumatic braking system for a vehicle, in particular utility vehicle, and to a vehicle, in particular utility vehicle.

Braking systems, such as air brake systems, are used to control the movement of vehicles, in particular utility vehicles, in a safe and effective manner. In particular, pneumatic brakes are used on utility vehicles such as trucks, trailers, and buses, which typically have large gross vehicle weights. The inertial mass of these vehicles, in combination with the speeds at which they might travel, requires a braking arrangement which responds rapidly with appropriate braking power. One system component of a pneumatic brake arrangement is a spring brake actuator. The spring brake actuator typically provides the necessary force when braking the vehicle.

EP 4 316 924 A1 discloses a brake actuator, comprising a housing with an inlet port for receiving a fluid, and a push-rod aperture, and configured to accommodate a first chamber connected to the inlet port and a second chamber that includes the push-rod aperture. The first chamber and the second chamber are separated by a movable separation element to which a push-rod is connected that protrudes outside the housing via the push-rod aperture. A boot defining an inner volume has a proximal end section connected to the push-rod and a distal end section connected to the housing. A piston brake actuator further comprises a sealing member arranged and configured to seal the first chamber from the second chamber, in particular when the piston is actuated. The sealing member is preferably a toric joint or an o-ring arranged between the piston and an inner side of the housing.

In other words, in the prior art, a rubber boot is typically held by an O-ring in a groove of a pushrod. The o-ring causes an elastic force, i.e., a spring force, that fixates an end of the boot inside the groove. This prevents sliding of the boot on the pushrod and ensures tightness and a proper sealing.

Further, the push rod is connected to and/or integrally formed with a piston and a plastic spring seat is arranged on the piston for a positioning of a spring on the piston.

It is an object of the present disclosure to provide a technological contribution and to improve at least one aspect of the prior art. In particular, an object of the disclosure may be to provide a spring brake actuator with a proper fixation of the boot, a reliable sealing function and which may be efficient to manufacture.

The object is solved by the subject-matter according to independent claim 1 and according to the remaining independent claims. Dependent claims relate to preferred embodiments.

According to an aspect of the present disclosure, a boot-seat-arrangement for a spring brake actuator for a pneumatic braking system for a vehicle, in particular utility vehicle, is provided, wherein the boot-seat-arrangement comprises a piston, a spring seat for positioning a spring on the piston, a push rod, and a boot at least partially surrounding the push rod; the spring seat comprises a socket for contacting the piston; and the spring seat and/or the boot comprises an assembly section between the socket and the boot for fixating the boot to the socket.

In other words, the disclosure suggest that two parts of the spring brake actuator are combined into one device: the boot and the spring seat is combined to functioning together and/or to be a single piece. Thus, the boot-seat-arrangement may comprise the assembly section, and the assembly section is formed by the spring seat, the boot, or the spring seat and the boot. The assembly section is adapted to fixate the boot to the socket. By fixating the boot to the socket, sealing is achieved reliably and efficiently. The boot may be reliably fixated.

Thus, the boot does not need to be fixated to the push rod and/or to a groove therein. Thus, an O-ring to fixate the boot may be dispensed with. The boot-seat-arrangement is characterized by the lack of the need to use an O-ring for fixating the boot. Further, the manufacture of a groove in the push rod may be dispensed with. This may achieve a more efficient manufacture and mounting due to fewer parts that need to be assembled.

Optionally, the spring seat and/or the boot is adapted to sealingly contact the push rod in the assembly section. It is realized that the assembly section may be used to sealingly contact the push rod. Therein, the spring seat, the boot or a combination of the spring seat and the boot may contact the push rod sealingly. The contact of the push rod by the assembly section further achieves a reliable positioning of the boot.

Optionally, each of the spring seat and the boot comprises, in the assembly section, a mounting interface for fixating the boot and the spring seat to each other in a form-locking and/or force-locking manner. This enables that the spring seat and the boot may be manufactured separate from each other as separate parts, and one or each of the spring seat and the boot is adapted to be fixated with each other. The spring seat and the boot may be reliably connected by a form-locking and/or force-locking connection between the spring seat and the boot.

Optionally, the boot and the spring seat are integrally formed and/or the boot and the spring seat are bonded by a substance-to-substance bond to each other in the assembly section. It is realized that the boot and the spring seat may be manufactured as one piece and/or may be bonded together to form one piece. The one-piece solution enables an effective assembly and enables reliable sealing and position.

Optionally, the spring seat and/or the boot are made of rubber. Rubber may provide a suitable elasticity and, at the same time, enables an effective connection between the spring seat and the boot in the assembly section, in particular if the spring seat and the boot are integrally formed.

Optionally, the spring seat comprises an overmolded washer. Optionally to ensure an appropriate stiffness of a connection between the boot and the spring via the spring seat and to reduce deformations during working in various conditions, such as for example high temperature, the washer may be used. The washer may be joined with the spring seat in the overmolding process.

Optionally, the washer is parallel to the piston. This enables that a spring may exert a force effectively via the spring seat to the washer. The parallel arrangement of the washer and the piston may avoid an unreliable positioning of the spring on the spring seat.

Optionally, the socket comprises a rubber section; and the rubber section is in contact with the piston. The rubber section forms an interface between the socket and the piston. This may increase friction the socket and the piston and may enable reliable sealing and positioning of the socket on the piston.

Optionally, the spring seat is adapted to sealingly contact the piston caused by a force from the spring. I.e., the spring may press the spring seat towards the piston. This may improve sealing between the spring seat and the piston.

Optionally, the push rod comprises a circular cross-section with a constant diameter from the spring seat at least up to and including a contact surface for contacting the boot. The constant diameter may improve the efficiency of manufacturing the push rod. It is realized that fixating the boot to the socket by the assembly section may not require a groove in the push rod. Thus, a groove may be dispensed with. This enables a constant diameter of the push rod.

According to an aspect of the disclosure, a spring brake actuator for a pneumatic braking system for a vehicle, in particular utility vehicle, is provided, wherein the spring brake actuator comprises a boot-seat-arrangement as described above. Optionally, the boot-seat-arrangement comprises one or more features as described above as optional and/or preferred to achieve a technical effect corresponding thereto.

According to an aspect of the disclosure, a pneumatic braking system of a vehicle, in particular utility vehicle, is provided. The pneumatic braking system comprises the spring brake actuator as described above. Optionally, the spring brake actuator and/or the boot-seat-arrangement of the spring brake actuator comprises one or more features as described above as optional and/or preferred to achieve a technical effect corresponding thereto.

According to an aspect of the disclosure, vehicle, in particular utility vehicle, is provided. The vehicle, in particular utility vehicle, comprises the pneumatic braking system as described above. Optionally, the pneumatic braking system, the spring brake actuator thereof and/or the boot-seat-arrangement thereof comprises one or more features as described above as optional and/or preferred to achieve a technical effect corresponding thereto.

Further advantages and technical features and their technical effects are disclosed in the figures and the description thereof.

The figures show preferred embodiments as follows:
- Fig. 1: a schematic of a vehicle, in particular utility vehicle, according to an embodiment of the disclosure;
- Fig. 2: a sectional view of a boot-seat-arrangement;
- Fig. 3: a sectional view of a boot-seat-arrangement according to an embodiment of the disclosure;
- Fig. 4: a sectional view of a boot-seat-arrangement according to an embodiment of the disclosure;
- Fig. 5: a sectional view of a boot-seat-arrangement according to an embodiment of the disclosure; and
- Fig. 6: a sectional view of a boot-seat-arrangement according to an embodiment of the disclosure.

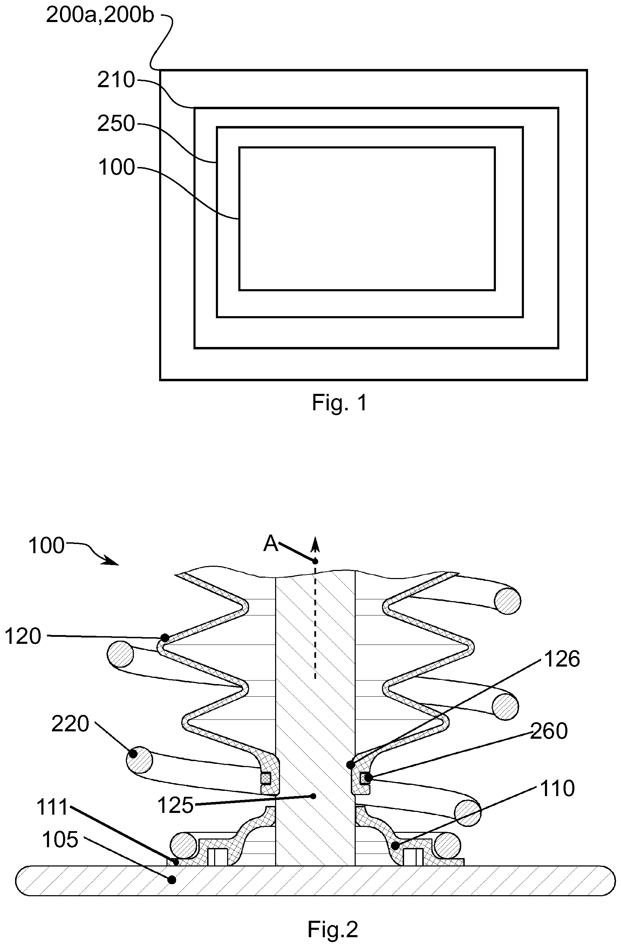

Figure 1 shows a schematic of a vehicle 200a, in particular utility vehicle 200b, according to an embodiment of the disclosure. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck, a bus, and/or a vehicle of a vehicle combination.

The vehicle 200a, 200b comprises a pneumatic braking system 210. The pneumatic braking system 210 comprises pneumatic and optionally electric components. For example, a brake request by a driver and/or operator of the vehicle 200a, 200b may lead to a brake signal that causes a pneumatic and/or an electro-pneumatic actuation of the pneumatic braking system 210. Therein, pressurized air is provided and controlled to actuate the pneumatic braking system 210 to brake the vehicle 200a, 200b.

The pneumatic braking system 210 comprises a spring brake actuator 250. The spring brake actuator 250 is adapted to be pneumatically actuated to perform a mechanical actuation of a brake. The spring brake actuator 250 comprises a boot-seat-arrangement 100.

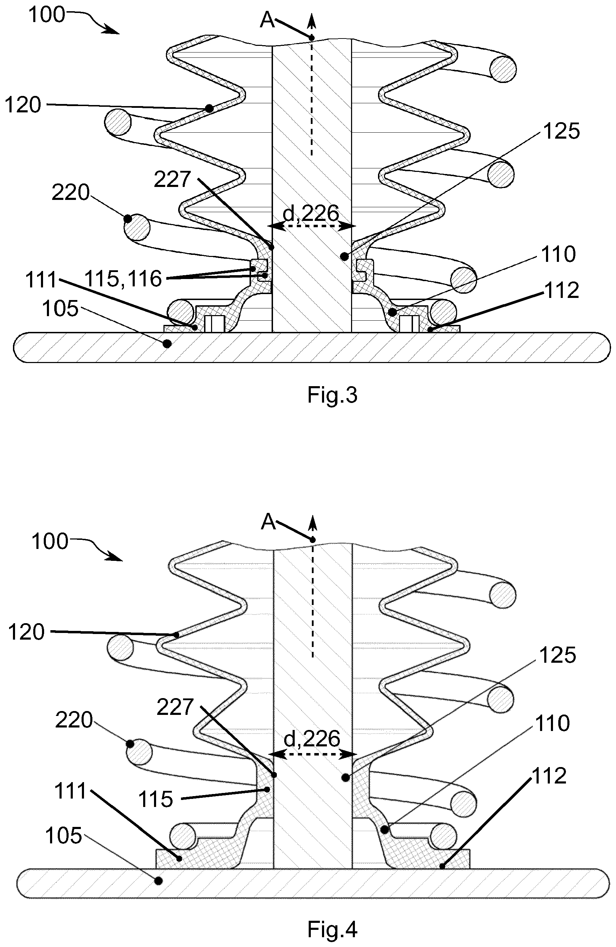

The boot-seat-arrangement 100 is further described with reference to Figures 3 to 6. A boot-seat-arrangement 100 according to the prior art is described under reference to Figure 2.

Figure 2 shows a sectional view of a boot-seat-arrangement 100. The boot-seat-arrangement 100 is a boot-seat-arrangement 100 as known from the prior art.

The boot-seat-arrangement 100 comprises a piston 105, a spring seat 110 for positioning a spring 220 on the piston 105, a push rod 125, and a boot 120 at least partially surrounding the push rod 125.

The spring seat 110 comprises a socket 111 for contacting the piston 105.

The spring seat 110 and the boot 120 are two separate parts. The push rod 125 defines an axial direction A, and the spring seat 110 and the boot 120 are arranged in a distance from each other along the axial direction A. I.e., the spring seat 110 and the boot 120 are separated from each other.

The push rod 125 comprises a groove 126. An end of the boot 120 is arranged within the groove 126. The groove 126 is a circumferential recess in the push rod 120. The push rod 120 comprises, along the axial direction A, a varying diameter so that the groove 126 is formed. The boot-seat-arrangement 100 comprises an o-ring 260. The o-ring 260 is, in the axial direction A, arranged with the groove 126 and is arranged radially outwardly from the boot 120. The o-ring 260 presses the boot 120 into the groove 126. A spring force generated by the o-ring 260 holds end of the boot 120 inside the groove 126. This prevents sliding of the boot 120 on the pushrod 125 and ensures tightness.

The function of the spring seat 110 is only positioning of the spring 220 on the piston 105.

Figure 3 shows a sectional view of a boot-seat-arrangement 100 according to an embodiment of the disclosure. The boot-seat-arrangement 100 of Figure 3 is a boot-seat-arrangement 100 for a spring brake actuator 250 for a pneumatic braking system 210 for a vehicle 200a, 200b. Such a spring brake actuator 250, such a pneumatic braking system 210 and such a vehicle 200a, 200b is described with reference to Figure 1. Figure 3 is described under reference to Figure 1.

The boot-seat-arrangement 100 comprises a piston 105 and a push rod 125. The piston 105 and the push rod 125 may be integrally formed. Each of the piston 105 and the push rod 125 may be made of metal. The piston 105 is adapted to be deflected under the application of pressurized air and/or under a force of a spring 220.

The boot-seat-arrangement 100 comprises a spring seat 110 for positioning the spring 220 on the piston 105. The spring 220 is adapted to exert an elastic force on the piston 105. The spring seat 110 is adapted to sealingly contact the piston 105 caused by a force from the spring 220. In particular, the spring 220 is adapted to deflect the piston 105 into a ground position. The spring seat 110 comprises a socket 111 for contacting the piston 105. The socket 111 comprises a rubber section 112; and the rubber section 112 is in contact with the piston 105. I.e., the rubber section 112 forms an interface between the socket 111 of the spring seat 110 and the piston 105.

The boot-seat-arrangement 100 comprises a boot 120 at least partially surrounding the push rod 125. The boot 120 is made of rubber 120. The boot 120 is adapted to be compressed in the axial direction A. The boot 120 surrounds the push rod 125 circumferentially.

The spring seat 110 and the boot 120 comprises an assembly section 115 between the socket 111 and the boot 120 for fixating the boot 120 to the socket 111. The assembly section 115 achieves that the boot 120 is mounted to the socket 111. Thus, the boot 120 surrounds the pushrod 125 along the axial direction A from the socket 111.

Each of the spring seat 110 and the boot 120 comprises, in the assembly section 115, a mounting interface 116 for fixating the boot 120 and the spring seat 110 to each other in a form-locking and/or force-locking manner. Here, the mounting interface 116 is formed by interlocking features of the spring seat 110 and the boot 120. Thus, the spring seat 110 and the boot 120 overlap in the axial direction A in the assembly section 115. Therein, the boot 120 comprises an interlocking feature as the mounting interface 116 to engage with the spring seat 110, and the spring seat 110 comprises an interlocking feature 115 as the mounting interface to engage with the boot 120.

The spring seat 110 and/or the boot 120 is adapted to sealingly contact the push rod 125 in the assembly section 115. I.e., each of the spring seat 110 and the boot 120 comprises an inner diameter that equals a diameter d of the push rod 125.

The spring seat 110 may be made of a thermoplastic, e.g., polypropylene (PP), and the boot 120 is made of rubber.

The push rod 125 comprises a circular cross-section 226 with a constant diameter d from the spring seat 110 at least up to and including a contact surface 227 for contacting the boot 120. The diameter d equals the diameter of boot 120 in the assembly section 115.

In the boot-seat-arrangement 100, the boot 120 is fixated by the shape of the spring seat 110, wherein the boot 120 and the spring seat 110 are functioning together. The boot 120 and spring seat 110 together is held by the spring 220.

Figure 4 shows a sectional view of a boot-seat-arrangement 100 according to an embodiment of the disclosure. The boot-seat-arrangement 100 of Figure 4 is an alternative to the boot-seat-arrangement 100 of Figure 3. The boot-seat-arrangement 100 of Figure 4 is described under reference to Figure 3, wherein differences between the boot-seat-arrangements 100 are described.

The boot 120 and the spring seat 110 are integrally formed and/or the boot 120 and the spring seat 110 are bonded by a substance-to-substance bond to each other in the assembly section 115. Thus, the spring seat 110 and the boot 120 integrally form the assembly section 115 between the socket 111 and the boot 120 for fixating the boot 120 to the socket 111. The spring seat 110 and the boot 120 are made of rubber.

The boot 120 and a spring seat 110 is one device which eliminates the need of an o-ring. The boot 120 is pressed against the piston 105, i.e., the plate of service piston, by the spring 220 and the generated spring force guarantees tightness of connection. This embodiment lacks each of the need to use an o-ring, a separate spring seat and a need to making groove 126 in the pushrod 125. Thus, the boot-seat-arrangement 100 is efficiently to assembly and requires fewer parts.

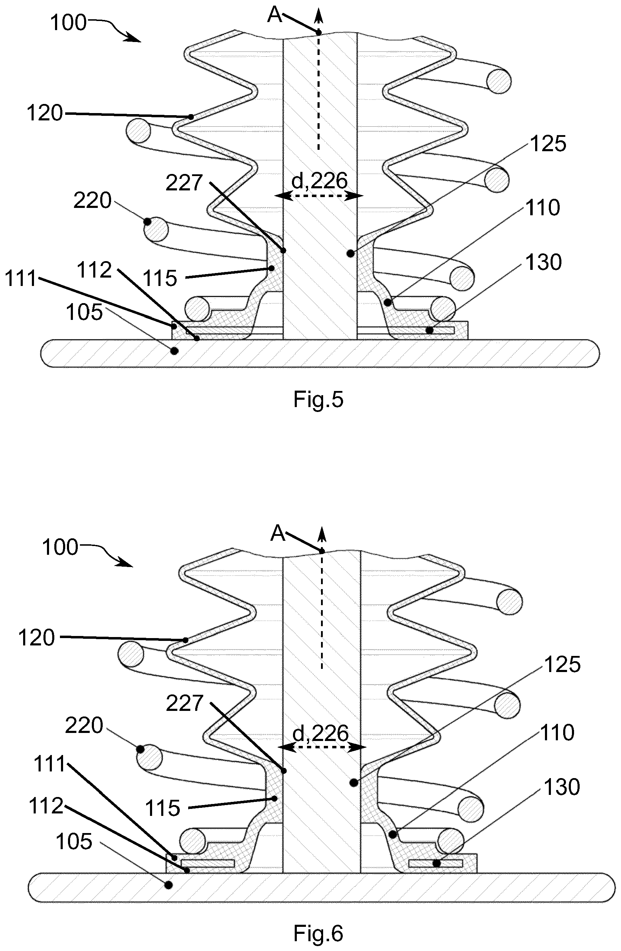

Figure 5 shows a sectional view of a boot-seat-arrangement 100 according to an embodiment of the disclosure. The boot-seat-arrangement 100 of Figure 5 is an alternative to the boot-seat-arrangement 100 of Figure 4. The boot-seat-arrangement 100 of Figure 5 is described under reference to Figure 4, wherein differences between the boot-seat-arrangements 100 are described.

The spring seat 110 comprises an overmolded washer 130. The overmolded washer 130 is annularly shaped. The washer 130 may be made of plastic or metal. The washer 130 reinforces the spring seat 110. To achieve an improved appropriate stiffness of a connection between the boot 120 and the spring 220 and reduce deformations during working in various conditions the washer 130 is joined with the rubber boot 120 in an overmolding process. The inner part of the boot 120 serves only as a guide on the pushrod 125 on the service piston 105.

The washer 130 is arranged parallel to the piston 105. The washer 130 is radially outwardly delimited by the seat 110 and/or the socket 111 of the seat 110. The washer 130 is radially inwardly delimited by the push rod 125. I.e., in a radial direction, the washer 130 extends from within the seat 110 and/or the socket 111 of the seat 110 to the push rod 125. I.e., an inner diameter of the washer 130 equals essentially the diameter d of the push rod 125, and an outer diameter of the washer 120 is less than an outer diameter of the seat 110 and/or of the socket 111.

Figure 6 shows a sectional view of a boot-seat-arrangement 100 according to an embodiment of the disclosure. The boot-seat-arrangement 100 of Figure 5 is an alternative to the boot-seat-arrangement 100 of Figure 4. The boot-seat-arrangement 100 of Figure 6 is described under reference to Figure 4, wherein differences between the boot-seat-arrangements 100 are described.

The washer 130 is radially outwardly and radially inwardly delimited by the seat 110 and/or the socket 111 of the seat 110. I.e., an inner diameter of the washer 130 is larger than an inner diameter of the seat 110 and/or of the socket 111, and an outer diameter of the washer 120 is less than an outer diameter of the seat 110 and/or of the socket 111.

### List of reference signs (Part of the description)

- 100: boot-seat-arrangement
- 105: piston
- 110: spring seat
- 111: socket
- 112: rubber section
- 115: assembly section
- 116: mounting interface
- 120: boot
- 125: push rod
- 126: groove
- 130: washer

- 200a: vehicle
- 200b: utility vehicle

- 210: pneumatic braking system

- 220: spring
- 226: cross-section
- 227: contact surface
- 250: spring brake actuator

- 260: o-ring

- A: axial direction
- d: diameter

## Claims

1. Boot-seat-arrangement (100) for a spring brake actuator (250) for a pneumatic braking system (210) for a vehicle (200a), in particular utility vehicle (200b), wherein
- the boot-seat-arrangement (100) comprises a piston (105), a spring seat (110) for positioning a spring (220) on the piston (105), a push rod (125), and a boot (120) at least partially surrounding the push rod (125);
- the spring seat (110) comprises a socket (111) for contacting the piston (105); and
- the spring seat (110) and/or the boot (120) comprises an assembly section (115) between the socket (111) and the boot (120) for fixating the boot (120) to the socket (111).

2. Boot-seat-arrangement (100) as claimed in claim 1, wherein the spring seat (110) and/or the boot (120) is adapted to sealingly contact the push rod (125) in the assembly section (115).

3. Boot-seat-arrangement (100) as claimed in claim 1 or 2, wherein each of the spring seat (110) and the boot (120) comprises, in the assembly section (115), a mounting interface (116) for fixating the boot (120) and the spring seat (110) to each other in a form-locking and/or force-locking manner.

4. Boot-seat-arrangement (100) as claimed in claim 1 or 2, wherein the boot (120) and the spring seat (110) are integrally formed and/or the boot (120) and the spring seat (110) are bonded by a substance-to-substance bond to each other in the assembly section (115).

5. Boot-seat-arrangement (100) as claimed in any one of the preceding claims, wherein the spring seat (110) and/or the boot (120) are made of rubber.

6. Boot-seat-arrangement (100) as claimed in any one of the preceding claims, wherein the spring seat (110) comprises an overmolded washer (130).

7. Boot-seat-arrangement (100) as claimed in claim 6, wherein the washer (130) is parallel to the piston (105).

8. Boot-seat-arrangement (100) as claimed in any one of the preceding claims, wherein the socket (111) comprises a rubber section (112); and the rubber section (112) is in contact with the piston (105).

9. Boot-seat-arrangement (100) as claimed in any one of the preceding claims, wherein the spring seat (110) is adapted to sealingly contact the piston (105) caused by a force from the spring (220).

10. Boot-seat-arrangement (100) as claimed in any one of the preceding claims, wherein the push rod (125) comprises a circular cross-section (226) with a constant diameter (d) from the spring seat (110) at least up to and including a contact surface (227) for contacting the boot (120).

11. Spring brake actuator (250) for a pneumatic braking system (210) for a vehicle (200a), in particular utility vehicle (200b), wherein the spring brake actuator (250) comprises a boot-seat-arrangement (100) as claimed in any one of the preceding claims.

12. Pneumatic braking system (210) for a vehicle (200a), in particular utility vehicle (200b), wherein the pneumatic braking system comprises a spring brake actuator (250) as claimed in claim 11.

13. Vehicle (200a), in particular utility vehicle (200b), comprising a pneumatic braking system (210) as claimed in claim 12.
